**Europäisches Patentamt**

**European Patent Office**

**Office européen des brevets**

(19)

(11) Veröffentlichungsnummer: **0 168 523**

**B1**

(12)

# EUROPÄISCHE PATENTSCHRIFT

(45) Veröffentlichungstag der Patentschrift:
16.03.88

(21) Anmeldenummer: 84113817.5

(22) Anmeldetag: 15.11.84

(51) Int. Cl.⁴: **G 11 B 23/033**

(54) **Kompletthülle für ein Floppy-Disk.**

(30) Priorität: 14.07.84 DE 3425990

(43) Veröffentlichungstag der Anmeldung:
22.01.86 Patentblatt 86/4

(45) Bekanntmachung des Hinweises auf die Patenterteilung:
16.03.88 Patentblatt 88/11

(84) Benannte Vertragsstaaten:
AT BE CH DE FR GB IT LI LU NL SE

(56) Entgegenhaltungen:
DE-A-2 800 237
DE-A-3 216 625
DE-B-2 325 715
DE-B-2 634 501
GB-A-2 096 194

(73) Patentinhaber: **Firma Carl Freudenberg, Höhnerweg
4, D-6940 Weinheim/Bergstrasse (DE)**

(72) Erfinder: **Buchwald, Holger, Graf- Zeppelin-
Strasse 2, D-6944 Hemsbach (DE)**
Erfinder: **Schäfer, Werner, Lindenstrasse 11a,
D-6943 Birkenau (DE)**
Erfinder: **Hartwig, Peter, Dr., Freudenbergstrasse
33, D-6940 Weinheim (DE)**

(74) Vertreter: **Weissenfeld- Richters, Helga, Dr.,
Höhnerweg 2, D-6940 Weinheim/Bergstrasse (DE)**

EP 0 168 523 B1

## Beschreibung

Die Erfindung betrifft eine Kompletthülle (im folgenden auch Jacket genannt) für ein Floppy-Disk. Derartige Datenträger bestehen aus einer mit magnetisierbarem Material beschichteten, flexiblen Scheibe, welche sich in einer Hülle befindet und während des Gebrauchs eine Drehbewegung vollführt. Das Jacket besteht in der Regel aus einer der Außenseite zugewandten PVC-Folie (cover), welche innen mit einem Vliesstoff (liner) ausgekleidet ist.

Die PVC-Folie hat die Aufgabe, für die Hülle die notwendige Standigkeit und Flexibilität während Gebrauch und Lagerung der Diskette zu gewährleisten. Ferner soll sie den Datenträger vor mechanischer Beschädigung von außen schützen. Hauptaufgabe des Liners ist es, während des Betriebes auf dem Datenträger anfallende Staubpartikel sanft gleitend aufzunehmen und ein niedriges, gleichmäßiges Drehmoment der Magnetscheibe in der Hülle sicherzustellen. Ferner wird dadurch vermieden, daß die magnetisierbare Beschichtung direkt mit dem PVC-Material in Berührung kommt und so Kratzer auf der Scheibe entstehen.

Floppy-Disk-Hüllen mit einem PVC-Cover haben eine Temperaturbeständigkeit von 10°C bis ca. 70 °C; diese Werte werden von dem thermischen Verhalten der PVC-Folie diktiert. Schwierigkeiten bezüglich der Temperaturbeständigkeit von Floppy-Disk-Hüllen (Lagerung und Transport in Kraftfahrzeugen, sonnenbeschienene Arbeitsplätze hinter Glas, Ablage auf Kühlflächen von Büromaschinen) machten die Suche nach neuen Jacket-Materialien erforderlich, welche das an die Grenze seiner thermischen Belastbarkeit gelangte PVC-Cover ersetzen können.

Ferner kann das Fehlen der Porosität in der PVC-Folie unter extremen Temperaturbedingungen bei Anwesenheit von Feuchtigkeit zu unerwünschter Kondenswasserbildung auf der Floppy-Disk führen. Da eine Perforation der Folie bisher nur unzulänglich Abhilfe brachte, mußte auch aus diesem Grunde nach geeigneten Ersatzmaterialien gesucht werden.

Oft ist es wünschenswert, das Cover der Floppy-Disk-Hülle, z. B. zu Werbe- oder Kennzeichnungszwecken, bedruckbar bzw. beschriftbar auszugestalten. Von organischen Lösungsmitteln freie Schreibgeräte (gewöhnliche Faserschreiber, Kugelschreiber und Bleistifte) sind zum Beschriften von PVC-Folie jedoch nicht geeignet. Eine Kennzeichnungsmöglichkeit ohne Verwendung von Aufklebern würde zu einer erheblichen Verbesaerung bezüglich der Handhabung von Disketten führen. Auch aus diesem Grunde ist ein Ersatz des PVC-Covers wünschenswert.

In jedem Falle aollen jedoch die günstigen Eigenschaften des Liners (Vlieastoff) erhalten bleiben.

Die DE-B-23 25 715 beschreibt eine Schutzhülle für einen Informationsträger, insbesondere für eine Bildplatte, wobei das Cover aus Papier oder einem nicht näher bezeichneten Kunststoff und der Liner aus einer Faservliesschicht besteht. Eine solche Hülle ist bei Verwendung von Papier als Cover-Material in weiten Grenzen temperaturbeständig. Ebenso ist das Problem der Beschriftbarkeit/ Bedruckbarkeit gelöst. Die Hüllenaußenseite kann jedoch nicht die für den Schutz der Diskette erforderlichen mechanischen Eigenschaften, wie Zug-und Ritzfestigkeit, aufweisen. Außerdem wird beim Aufkaschieren des Liners auf das Papier dessen ohnehin schlechte Feuchtigkeitsdurchlässigkeit noch weiter erniedrigt, so daß das Produkt in dieser Beziehung wieder nahezu die nachteiligen Eigenschaften einer PVC-Folie erhält. Dieser Umstand ist nicht so sehr von Bedeutung, wenn das Jacket, wie in der erwähnten Auslegeschrift beschrieben, allein der Lagerung und Handhabung des Informationsträgers dient und dieser sich während des Betriebes außerhalb. der Hülle befindet.

Für ein auch während Aufnahme und Wiedergabe in seiner Hülle verbleibendes Floppy-Disk ist ein solches Material jedoch unter diesen Umständen ungeeignet.

GB-A-20 96 194 beschreibt eine Außenhülle aus Vliesstoff für Schallplatten. Hierin wird auch deren Anwendungsmöglichkeit für Floppy-Disks vorgeschlagen. Dieses "sleeve" ist jedoch elektrisch leitend und hat in erster Linie die Aufgabe, die Schallplatte lediglich bei Lagerung und Handhabung, also außerhalb dea Aufnahme-/Wiedergabe-Gerätes, umhüllend zu schützen gegen statische Aufladung. Die gestellten Anforderungen sind hier also aufgrund der andersartigen Aufgabenstellung völlig andere, da das "sleeve" sich während des Betriebes nicht in der Abspieleinheit befindet. Auf Jackets für Floppy-Disks sind die Erkenntnisse der obigen britischen Druckschrift daher nicht übertragbar.

Der Erfindung liegt die Aufgabe zugrunde, eine Kompletthülle (jacket) für Floppy-Disks zu entwickeln, welche die Anwendung einer PVC-Folie vermeidet, einfach zu fertigen ist und eine Temperaturbeständigkeit von über 80°C aufweist. Dabei soll die Hüllenaußenseite (cover) feinporig und von hoher Porosität sein, um einen verbesserten Feuchtigkeitsaustausch zu gewährleisten. Ferner soll diese Außenseite mit gebräuchlichen Materialien und Verfahren beschriftbar und bedruckbar sein. Die günstigen Eigenschaften der PVC-Folie nach dem Stand der Technik, wie Standigkeit, Flexibilität, Abriebfestigkeit, Verschweißbarkeit und Dicke, sollen weitgehend erhalten bleiben. Das bewährte Liner-Material Vliesstoff hat dabei wie bisher als Innenauskleidung zu dienen.

Alle diese Aufgaben werden in einfacher Weise gelöst durch eine Kompletthülle (jacket), welche zur Gänze aus ein- oder mehrschichtigem Vliesstoff besteht. Wesentlich ist ferner, daß der Vliesstoff eine glatte und abriebfeste, poröse Außenseite, welche die Aufgaben eines Covers übernimmt, und eine weiche, faserige Innenseite aufweist, welche den bisherigen Liner ersetzt. Cover und Liner sind somit aus demselben Material. Der Vliesstoff besteht vorzugsweise aus Polyester-, Polyamid-, Polyolefin-, PVC-Fasern, auch als Heterofil-Fasern, oder Fasernmischungen.

Ein Bedrucken des Vliesstoffes auf seiner Cover-Seite ist beispielsweise mit gewöhnlichen

2

Textildruckverfahren möglich. Ferner ist diese Fläche sowohl aufgrund ihrer hellen Farbe als auch ihrer Porosität für die Beschriftung mit Tinte, Kugel- oder Filzschreiber hervorragend geeignet. Zur Erleichterung der Bedruck- oder Beschriftbarkeit, zur Erhöhung der Steifigkeit, zur Einfärbung oder als Antistatikausrüstung kann die Außenseite mit den bei Vliesstoffen üblichen Finishs versehen sein. Die Kompletthülle besitzt aufgrund ihrer hohen Porosität über ihre Gesamtdicke eine hohe Feuchtigkeitsdurchlässigkeit. Schwitzwasserbildung wird somit zuverlässig vermieden. Die Temperaturbeständigkeit der Hülle ist unter allen realistischen Einsatzbedingungen aufgrund des eingesetzten Fasermaterials voll gewährleistet. Nicht zuletzt zeichnen hohe Steifigkeitswerte - sie werden im Beispiel durch Zahlenangaben belegt - das erfindungsgemäße Jacket aus.

Die Hülle kann gemäß der Erfindung ein-, vorzugsweise mehrschichtig aufgebaut sein: Anzahl und Aufeinanderfolge der einzelnen Schichten können bei dieser Ausführungsform je nach den gewünschten Abrieb- und Steifigkeitswerten gezielt eingestellt werden.

Vorzugsweise ist das erfindungsgemäße Jacket in seiner mehrschichtigen Ausführung punktverschweißt, um einerseits gute Feuchtigkeitsdurchlässigkeit und hohe Flexibilität, andererseits festen Zusammenhalt der einzelnen Schichten zu gewährleisten.

Zur Vermeidung von Störungen elektrostatischer Art, wie sie häufig beim Betrieb magnetischer Datenträger auftreten, ist es üblich, Cover und/oder Liner von Floppy-Disk-Hüllen mit elektrisch leitfähigen Materialien zu versehen. Dies gelingt bei der erfindungsgemäßen Ausführungsform besonders elegant dann, wenn ein Teil der Fasern in dem verwendeten Vliesstoff elektrisch leitfähig ist. Mit der Verwendung solcher Fasern ist es möglich, eine Kompletthülle in einer besonders bevorzugten Ausführungsform herzustellen, deren elektrischer Oberflächenwiderstand $R_{OT}$ (gemessen nach DIN 54 345, Bl. 1) und Durchgangswiderstand $R_D$ (gemessen nach DIN 53 482), unabhängig von der Feuchtigkeit und auch bei Temperaturen über 100°C, einen Wert von $10^9\Omega$, zweckmäßigerweise sogar $10^6\Omega$, nicht überschreitet. Besonders geeignete Fasern dieser Art sind in der deutschen DE-A-33 26 597 beschrieben. Es handelt sich dabei um Polypropylen-, Polyester- und/oder Viskose-Fasern, welche 20 bis 40 Gew.-%, bezogen auf das Gesamtgewicht dieser Fasern, eingesponnenen Ruß in fein verteilter Form enthalten.

Somit entfällt die nachträgliche Ausrüstung des Vliesstoffes mit einem Antistatikum.

Als beispielhafte Ausführung sind in den Abbildungen eine erfindungsgemäße Floppy-Disk-Hülle sowie deren Herstellung dargelegt. Dabei zeigen:.

Fig. 1 ein einstufiges Herstellungsverfahren für ein mehrschichtiges Jacket,

Fig. 2 das Jacket-Material im Querschnitt,

Fig. 3 die fertige Kompletthülle mit dem Floppy-Disk.

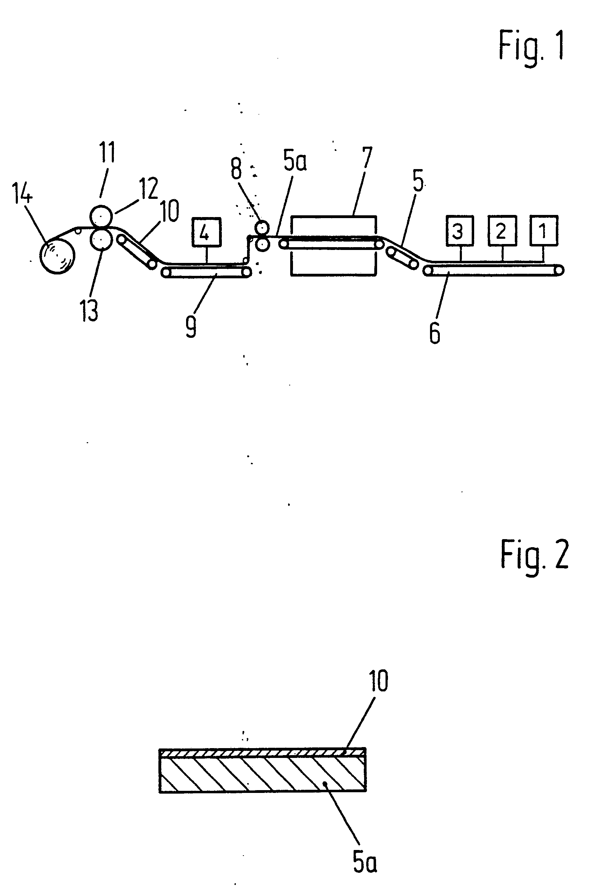

Das folgende Beispiel mit den Figuren 1 bis 3 soll Aufbau und Eigenschaften einer bevorzugten, mehrschichtigen Ausführungsform des Jackets gemäß der vorliegenden Erfindung verdeutlichen, ohne deren in den Ansprüchen festgelegten Umfang in irgendeiner Weise einzuschränken.

**Beispiel**

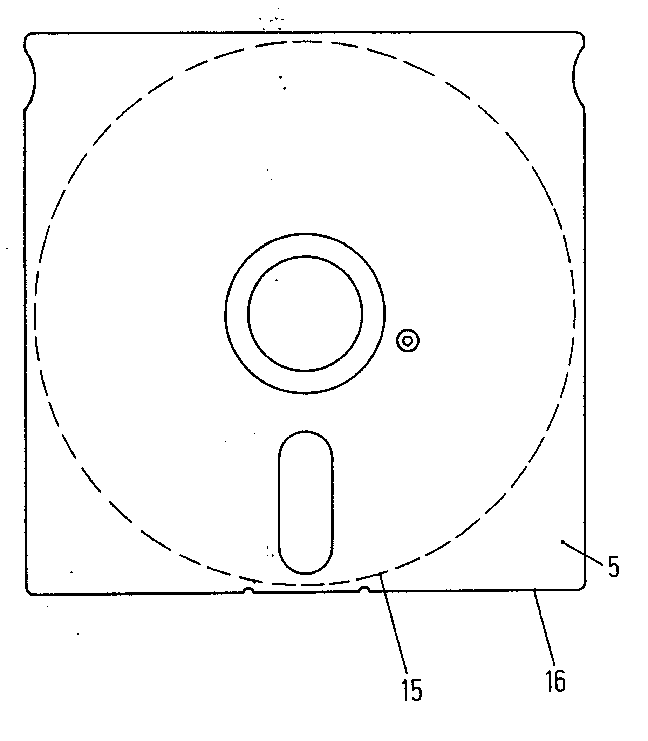

Eine Fasermischung aus 100 % thermisch aktivierbaren Bindefasern, vorzugsweise Heterofil-Fasern auf Basis Polyester/Co-Polyester mit einem Titer von 3,3 dtex und einem Schmelzpunkt von 225°C, wird über eine Krempelanlage 1, 2, 3 auf einem Transportband 6 zu einem Faservlies 5 gelegt. (Figur 1). Die Verfestigung erfolgt in einem Heißluftofen 7 mit anschließender Kalibrierung in einem Preßwerk 8 zur Ausbildung eines feinporigen Vliesstoffes. Der so erhaltene Vliesstoff hat ein Gewicht von 200 g/m² und bildet die abriebfeste Außenseite 5 a (cover) des Jackets. Auf diesen Vliesstoff 5 a wird inline eine Fasermischung aus 100 % Polyester-Homofil-Fasern mit einem Titer von 1,7 dtex über eine Krempelmaschine 4 auf einem Transportband 9 zu einem Vlies 10 gelegt. Das Faservlies hat ein Gewicht von 30 g/m². Die Verfestigung und Verbindung erfolgt hier nach der Punkt-Schweiß-Technik in einem Kalander 11 mit einer glatten Stahlwalze 13 und einer gravierten Walze 12. Das aufgebrachte Vlies wird dadurch so ausgebildet, daß es einem Liner-Material entspricht in und die Innenseite 10 des Jackets bildet. Das Fertigmaterial mit einem Gewicht von 230 g/m² wird mit der Aufrollung 14 aufgerollt. Es besitzt einen Aufbau gemäß Figur 2. Aus diesem Bahnenmaterial kann eine erfindungsgemäße Kompletthülle 16 ausgestanzt werden (Figur 3), welche zusammengefaltet und mit einem Floppy-Disk 15 versehen wird.

Das in der beschriebenen Weise hergestellte Jacket 16 mit einem Gewicht von 230 g/m² zeigt in den Steifigkeitseigenschaften die gleichen Werte wie ein entsprechendes Hüllenmaterial auf Basis einer PVC-Folie (ca. 300 g/m²) mit einem Vliesstoff-Liner (ca. 35 g/m²), welches üblicherweise hierfür Verwendung findet.

Um die Steifigkeit in Meßwerten auszudrücken, wurden beide Proben mit dem Steifigkeitsprüfer 58963 der Firma Frank, Birkenau, unter folgenden Bedingungen gemessen (Tabelle 1):

Probengröße:     30 x 70 mm  
Biegewinkel:     30 °  
Biegeabstand:    10 mm  
Meßbereich:     5 N

**Tabelle 1**

| Probe | Einspannrichtung | Biegeseite | Biegekraft $\bar{x}$ [N] |
|---|---|---|---|
| erfindungsgemäße Vliesstoff-Hülle | längs | außen | 0,63 |
| | | Liner | 0,70 |
| | quer | außen | 0,66 |
| | | Liner | 0,70 |
| PVC-Hülle mit Liner | längs | Folie | 0,73 |
| | | Liner | 0,93 |
| | quer | Folie | 0,64 |
| | | Liner | 0,76 |

Häufig wurden auch etwas steifere PVC-Folien für das Cover von Floppy-Disk-Hüllen eingesetzt. Die erfindungsgemäße Vliesstoff-Hülle kann durch Änderung der Faserzusammensetzung auch in der Steifigkeit variiert werden, ohne das Quadratmeter-Gewicht zu erhöhen. Mit einer Fasermischung aus 70 % Polyester-Heterofilfasern (3,3 dtex) und 30 % Polyester-Homofilfasern (1,7 dtex) wurden entsprechende Werte bei der Steifigkeitsprüfung gegenüber einer steiferen PVC-Folie mit einem Quadratmeter-Gewicht von 350 g erreicht (Tabelle 2):

**Tabelle 2**

| Probe | Einspannrichtung | Biegeseite | Biegekraft $\bar{x}$ [N] |
|---|---|---|---|
| erfindungsgemäße Vliesstoff-Hülle | längs | außen | 0,93 |
| | | Liner | 0,95 |
| | quer | außen | 0,92 |
| | | Liner | 1,09 |
| | quer | außen | 0,92 |
| PVC-Folie (cover) ohne Liner | - | glatt | 0,99 |
| | | geprägt | 1,00 |

**Bezugszeichenliste**

| | |
|---|---|
| 1 bis 4 | Krempelmaschinen |
| 5 | Faservliesschicht aus 1, 2 und 3 |
| 5 a | verfestiger, als Cover dienender Faservliesstoff |
| 6, 9 | Transportband |
| 7 | Heißluftofen |
| 8 | Preßwerk |
| 10 | als Liner dienende Faservliesschicht |
| 11 | Kalander |
| 12 | Gravurwalze |
| 13 | glatte Stahlwalze |
| 14 | Aufrollung |
| 15 | Floppy-Disk |
| 16 | Kompletthülle |

**0 168 523**

**Patentansprüche**

1. Kompletthülle für ein Floppy-Disk, dadurch gekennzeichnet, daß sie zur Gänze aus ein- oder mehrschichtigem Vliesstoff besteht, welcher eine thermisch geglättete und abriebfeste, poröse Außenseite (5 a) und eine weiche, faserige, der Magnetschicht des Floppy-Disks zugewandte Innenseite (10) aufweist.

2. Kompletthülle nach Anspruch 1, dadurch gekennzeichnet, daß Polyester-, Polyamid-, Polyolefin-, PVC-Fasern, auch als Heterofil-Fasern oder Fasermischungen verwendet werden.

3. Kompletthülle nach Anspruch 1 oder 2, dadurch gekennzeichnet, daß sie aus mehr als einer Vliesschicht aufgebaut ist und daß die Schichten miteinander punktverschweißt sind.

4. Kompletthülle nach einem oder mehreren der vorhergehenden Ansprüche, dadurch gekennzeichnet, daß sowohl ihr elektrischer Oberflächenwiderstand $R_{OT}$, gemessen nach DIN 54 345, Blatt 1 als auch ihr Durchgangswiderstand $R_D$, gemessen nach DIN 53 482, einen Wert von $10^9 \Omega$ nicht überschreitet.

5. Kompletthülle nach Anspruch 4, dadurch gekennzeichnet, daß der Vliesstoff mit einem elektrisch leitfähigen Material gefüllte Fasern enthält.

6. Kompletthülle nach einem oder mehreren der vorhergehenden Ansprüche, dadurch gekennzeichnet, daß ihre Außenseite (5 a) ein Finish aufweist.

**Claims**

1. A jacket for a floppy disk, characterized in that it is entirely composed of a single-layered or multi-layered non-woven fabric liner which has a thermally smoothed and wear-resistant, porous outside (5a) and a soft, fibrous inside (10) facing the magnetic layer of the floppy disk.

2. A jacket according to claim 1, characterized in that polyester fibres, polyamide fibres, polyolefin fibres, PVC fibres, also in the form of heterofil fibres, or fibre blends, are used.

3. A jacket according to claim 1 or 2, characterized in that it is made up of more than one liner layer and that the layers are spot-welded to one another.

4. A jacket according to one or more of the preceding claims, characterized in that both its electrical surface resistance $R_{OT}$, measured in accordance with DIN 54 345, part 1, and its volume resistance $R_D$, measured in accordance with DIN 53 482, do not exceed a value of $10^9 \, \Omega$.

5. A jacket according to claim 4, characterized in that the liner includes fibres filled with an electrically conductive material.

6. A jacket according to one or more of the preceding claims, characterized in that its outside (5a) has a finish.

**Revendications**

1. Enveloppe complète pour un disque souple (Floppy disc), _caractérisée en ce qu'_elle est entièrement constituée d'un tissu non tissé à une ou plusieurs couches comportant une face extérieure poreuse (5a) lissée thermiquement et résistant à l'abrasion, ainsi qu'une face intérieure (10) souple, fibreuse et tournée vers la couche magnétique du disque souple.

2. Enveloppe complète selon la revendication 1, _caractérisée en ce qu'_on utilise des fibres de polyesters, de polyamides, de polyoléfines, de chlorure de polyvinyle, ainsi que des fibres à hétérofilaments ou des mélanges de fibres.

3. Enveloppe complète selon la revendication 1 ou 2, _caractérisée en ce qu'_elle est constituée de plus d'une couche de voile et en ce que les couches sont soudées l'une à l'autre par points.

4. Enveloppe complète selon une ou plusieurs des revendications précédentes, _caractérisée en ce que_ tant leur résistance électrique superficielle $R_{OT}$, mesurée selon la norme DIN 54 345, folio 1, que leur résistivité spécifique $R_D$, mesurée selon la norme DIN 53 482, ne dépassent pas une valeur de $10^9 \Omega$.

5. Enveloppe complète selon la revendication 4, _caractérisée en ce que_ le tissu non tissé contient des fibres chargées d'une matière conductrice de l'électricité.

6. Enveloppe complète selon une ou plusieurs des revendications précédentes, _caractérisée en ce que_ leur face extérieure (5a) comporte un apprêt.

Fig. 1

Fig. 2